# EUROPEAN PATENT APPLICATION

(11) **EP 1 481 950 A1**
(43) Date of publication of application: **01.12.2004**
(21) Application number: 04252315.9
(22) Date of filing: 20.04.2004
(51) Int. Cl.: C03B 29/08, C03B 35/16, F27B 9/06, F27B 9/10

(54) **Furnace and method using electric resistance and forced convection for heating glass sheets**

(30) Priority: 28.05.2003 US 447096
(71) Applicant: Glasstech, Inc., Perrysburg Ohio 43551 (US)
(72) Inventor: Shetterly, Donivan M., Rudolph, Ohio 43462 (US); Lewandowski, Troy R., Maumee, Ohio 43537 (US)
(74) Representative: Rees, Alexander Ellison

(57) **Abstract**

A furnace (12) and a method for heating roll conveyed glass sheets by electric resistance radiant heating and forced convection heating by hot air jets that also entrain hot air within the furnace. A hot air distributing system (86) includes upper and lower arrays (90) of hot air distributors (92) that are constructed to effectively supply the convective heating. The hot air distributors (92) have heat exchangers (96) that heat the pressurized air that provides the hot air jets. Electric resistance elements (82) are mounted on the lower (44) and upper (46) housing portions of the furnace (12). The heating can be performed on both uncoated and coated glass sheets and furnace (12) conveys the glass sheets either in an oscillating manner or a continuous one direction manner during the heating.

## Description

### BACKGROUND OF THE INVENTION

### 1. Field of the Invention

This invention relates to a furnace and method for heating glass sheets using both electric resistance and forced convection heating.

### 2. Background Art

Glass sheets are heated for processing such as forming, quenching for heat strengthening or tempering, or forming and quenching, etc. Such heating is conventionally performed by either electric resistance-type furnaces or by forced convection furnaces utilizing gas burners. Prior electric resistance-type furnaces are disclosed by United States patents 3,934,970 McMaster et al., 3,947,242 McMaster et al., and 3,994,711 McMaster, all of which have lower and upper housing portions that support electric resistance elements that provide radiant heating of glass sheets from below and above at their lower and upper surfaces during conveyance within a heating chamber of the furnace housing. Prior gas burner type forced convection furnaces are disclosed by United States Patent 4,738,705 McMaster and by the United States patents of Kenneth R. Kormanyos: 5,669,954; 5,672,191; 5,735,924; 5,762,677; and 5,792,232, all of which have lower and upper gas burner type forced convection heaters that provide forced convection heating of conveyed glass sheets from below and above at lower and upper surfaces of the glass sheets. The United States patents 6,131,411 Schnabel, Jr. and 6,279,349 Schnabel, Jr. disclose a glass sheet heating furnace having a lower housing portion including electric resistant heating and an upper housing portion including gas burner type forced convection heating.

Air jets provided by compressed air have also previously been used to entrain heated air within a furnace to provide glass sheet heating. Such air jets are disclosed in United States patent 4,505,671 at the exit end of an electric resistant type furnace to provide planarity of the heated glass sheets. Also, United States patent 4,529,380 McMaster discloses such air jets which are heated by an external heater to provide the primary source for heating the furnace.

Electric resistance furnaces for heating glass sheets are less expensive to manufacture than gas burner type forced convection furnaces and also can be more easily controlled by less involved control apparatus. In addition, electric resistance furnaces for heating glass sheets also result in a greater percentage of the energy input being transferred into the glass for the heating. However, radiant heating cannot efficiently heat low-emissivity coated glass sheets. In fact, some reflective coatings reflect over 90% of incident radiant heat which makes it virtually impossible to efficiently heat such glass sheets by radiant heat with electric resistance-type furnaces.

### SUMMARY OF THE INVENTION

An object of the present invention is to provide an improved furnace for heating coated glass sheets.

In carrying out the above object, the furnace of the invention includes a housing having lower and upper housing portions that cooperate to define a heating chamber. The housing has entrance and exit ends and a roll conveyor of the furnace conveys a glass sheet to be heated within the heating chamber along a horizontal conveying plane between the entrance and exit ends of the housing. Electric resistance elements are mounted on the lower and upper housing portions to provide radiant heating of the conveyed glass sheet from both below and above the conveying plane. A hot air distributing system of the furnace includes lower and upper arrays of hot air distributors respectively mounted within the heating chamber by the lower and upper housing portions below and above the conveying plane. The lower and upper arrays are located between the entrance and exit ends of the housing and include a plurality of hot air distributors that respectively supply upwardly and downwardly directed hot air jets toward the conveyed glass sheet and also entrain hot air in the heating chamber and the combined flow of hot air provides convective heating of the glass sheet in addition to the radiant heating thereof by the electric resistance elements during the conveyance between the entrance and exit ends of the housing.

The hot air distributing system includes a source of pressurized air that is located outside of the furnace and supplies pressurized air to the hot air distributors. These hot air distributors including heat exchangers for heating the pressurized air prior to delivery therefrom as the hot air jets. A control of the hot air distributing system terminates the supply of pressurized air to the hot air distributors above and below which there is no glass sheet being conveyed.

Each hot air distributor includes a horizontal delivery tube that is fed hot air by its heat exchanger, and each horizontal delivery tube has orifices through which the hot air flows to provide the hot air jets that are directed toward the conveyed glass sheet and also entrain the hot air within the heating chamber such that the combined flow of hot air provides the convective heating that cooperates with the radiant heating by the electric resistant elements to heat the glass sheet during its conveyance between the entrance and exit ends of the housing.

The roll conveyor of the furnace includes a drive that provides rotary driving of the conveyor. In one embodiment, the rotary driving is in opposite directions to provide oscillation of each glass sheet being heated during conveyance thereof in opposite directions between the entrance and exit ends of the housing. In another embodiment, the drive provides rotary driving of the roll conveyor in one direction to provide conveyance of each glass sheet in one direction from the entrance end of the housing to its exit end.

The lower portion of the housing has a flat floor and vertical side walls having upper ends. The upper portion of the housing has a downwardly opening semicircular shape having lower ends located above the upper ends of the vertical side walls of the lower housing portion such that the housing portions cooperate to define the heating chamber. The electric resistance elements are mounted within the heating chamber on the lower housing portion floor below the roll conveyor and on the semicircular upper housing portion above the roll conveyor.

The upper ends of the vertical walls of the lower housing portion and the lower ends of the semicircular upper housing portion cooperate to define side slots, the roll conveyor including rolls having ends that project outwardly through the side slots of the furnace housing. Heat seals of the furnace housing seal between the lower housing vertical side wall upper ends, the semicircular upper housing lower ends and the rolls to reduce heat loss from the heating chamber. The previously mentioned drive rotatively drives the roll ends externally of the heating chamber.

The hot air distributing system includes a control having a controller for adjusting the flow of pressurized air from the external source to the lower and upper arrays of hot air distributors so the lower and upper surfaces of the conveyed glass sheet are at the same temperature as each other throughout the heating.

Another object of the present invention is to provide an improved method for heating glass sheets.

In carrying out the above objects, the method for heating glass sheets in accordance with the invention is performed by conveying each glass sheet on a roll conveyor along a horizontal conveying plane within a heating chamber of a housing between entrance and exit ends of the housing. Resistance elements are electrically heated both below and above the conveying plane to provide radiant heating of each conveyed glass sheet. Hot air jets are supplied upwardly and downwardly toward the each conveyed glass sheet between the entrance and exit ends of the housing and these hot air jets also entrain hot air within the heating chamber such that the combined flow of hot air provides forced convection heating of each conveyed glass sheet in addition to the radiant heating thereof by the electric resistance elements.

The hot air jets are supplied upwardly and downwardly through lower and upper arrays of hot air distributors between the entrance and exit ends of the housing, and the hot air jet supply is terminated at each hot air distributor when there is no conveyed glass sheet above or below the distributor on the roll conveyor.

In one practice, the roll conveyor is rotatively driven in opposite directions to convey the glass sheets in an oscillating manner between the entrance and exit ends of the housing, while another practice has the roll conveyor rotatively driven in one direction to convey each glass sheet in one direction from the entrance end of the housing to its exit end.

The heating can be performed on conveyed glass sheets with uncoated lower and upper surfaces or on conveyed glass sheets which each have an uncoated lower surface and a coated upper surface. In the latter practice, the supply of the downwardly directed hot air jets is increased relative to the upwardly directed hot air jets during the conveyance so the upper and lower surfaces are at the same temperature as each other throughout the heating.

The objects, features and advantages and advantages of the present invention are readily apparent from the following detailed description of the preferred embodiments of the invention when taken in connection with the accompanying drawings.

### BRIEF DESCRIPTION OF THE DRAWINGS

FIGURE 1 is a side elevational view of one embodiment of a glass processing system including a furnace constructed in accordance with the invention and to perform the glass sheet heating method of the invention.
FIGURE 2 is a cross sectional view taken through the furnace along the direction of line 2-2 in Figure 1.
FIGURE 3 is a perspective and partially schematic view of a hot air distributing system that provides forced convective heating of a glass sheet conveyed on a roll conveyor of the furnace.
FIGURE 4a is a partial view taken in the same direction as Figure 1 to illustrate the manner in which uncoated glass sheets are conveyed on the roll conveyor for the heating.
FIGURE 4b is a partial view taken in the same direction as Figure 1 to illustrate the manner in which coated glass sheets are conveyed on the roll conveyor with a coated surface thereof facing upwardly and an uncoated surface thereof facing downwardly and supported by rolls of the conveyor for the heating.
FIGURE 5 is a partial perspective view taken in the same direction but on an enlarged scale from Figure 3 to further illustrate the construction of hot air distributors of the hot air distributing system utilized to provide the forced convective heating.
FIGURE 6 is a partial sectional view taken along the direction of line 6-6 in Figure 5 to illustrate the manner in which the forced convection heating is performed.
FIGURE 7 is a bottom plan view taken in the direction of line 7-7 in Figure 6 and illustrates the manner in which an array of the hot air distributors have staggered delivery orifices for delivering the downwardly directed convective heating.
FIGURE 8 is an elevational view illustrating another preferred construction of hot air distributors of the hot air distributing system.
FIGURE 9 is an elevational view of the hot air distributors taken along the direction of line 9-9 in Figure 8.
FIGURE 10 is a schematic side elevational view of another embodiment of the furnace similar to Figure 1 but having a roll conveyor that is driven in a single direction to provide continuous conveyance from the left entrance end of the furnace to its right exit end.

### DETAILED DESCRIPTION OF THE PREFERRED EMBODIMENTS

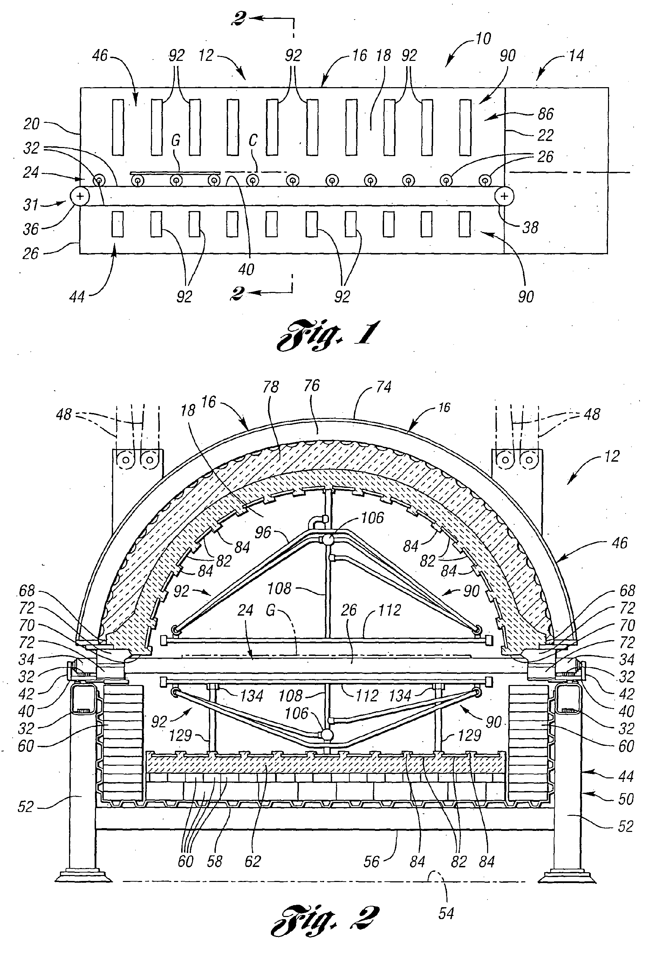

With reference to Figure 1 of the drawings, a glass sheet processing system generally indicated by 10 includes a heating furnace 12 constructed in accordance with the present invention to heat glass sheets G, and the system also includes a processing station 14 for processing the heated glass sheets to provide forming, quenching for heat strengthening or tempering, or forming and quenching, etc. The method for heating glass sheets in accordance with the invention is performed within the furnace 12 to heat glass sheets G from an ambient temperature to a sufficiently high temperature for the processing to be performed. Both the furnace 12 and the glass sheet heating method will be described in an integrated manner to facilitate an understanding of all aspects of the invention.

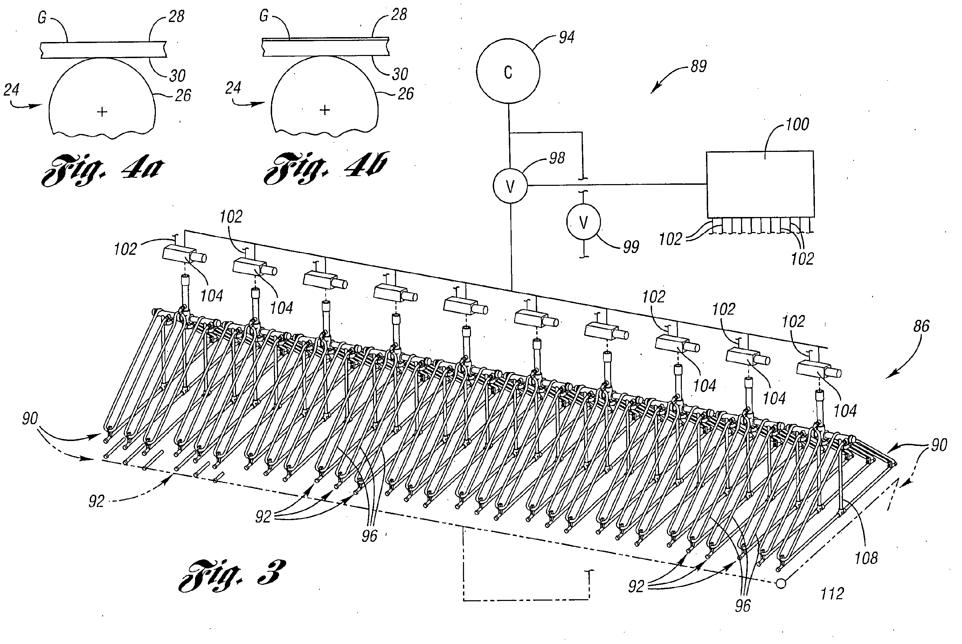

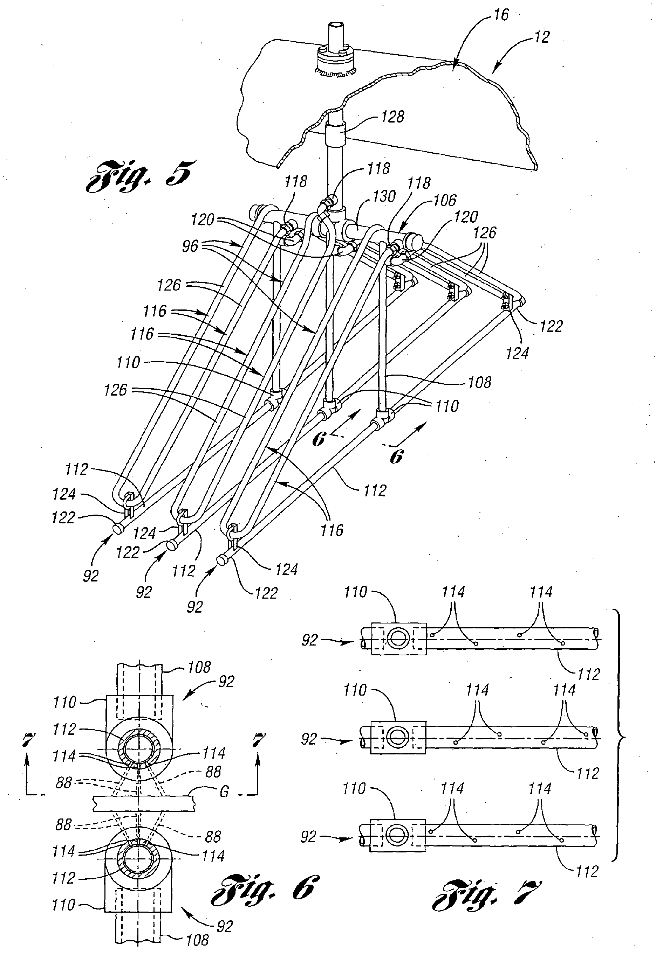

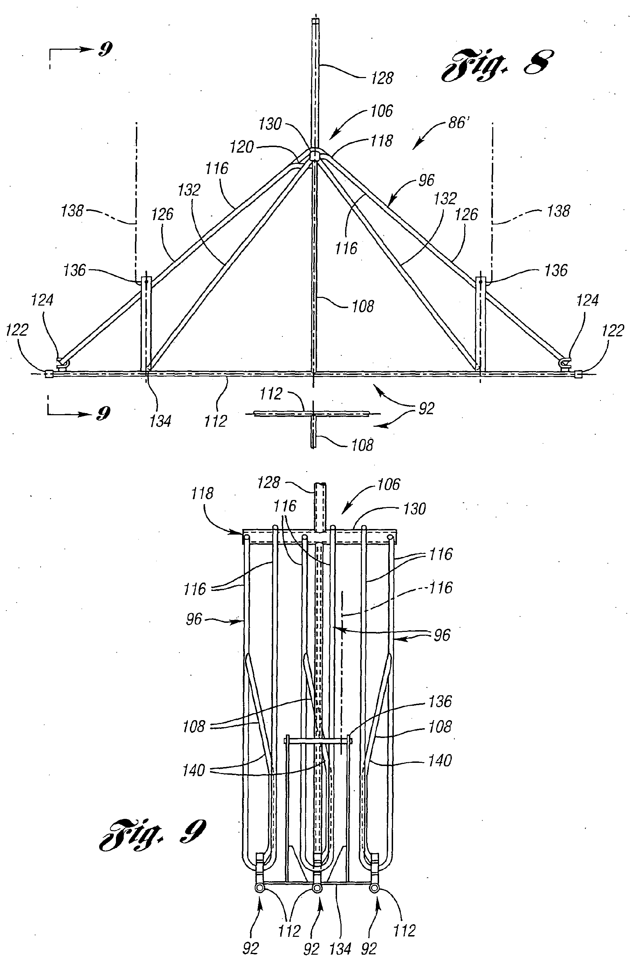

Furnace 12 as illustrated in Figures 1 and 2 includes an insulated housing 16 that defines a heating chamber 18 in which the glass sheets G are heated. This housing 16 as shown in Figure 1 has a somewhat elongated construction including a left entrance end 20 where the glass sheets are introduced for the heating and a right exit end 22 where the heated glass sheets are delivered to the processing station 14. It should be appreciated that many types of the processing performed within the station 14 can be at a hot temperature so that there is essentially a continuous heated chamber between the furnace 12 and the processing station 14. Within the heating chamber, the furnace 12 includes a roll conveyor 24 having rolls 26 for conveying the glass sheets to be heated along a horizontal conveying plane C between the entrance and exit ends 20 and 22. The heating can be performed as shown in Figure 4a on a conveyed glass sheet having uncoated upper and lower surfaces 28 and 30. In addition, the heating can be performed as shown in Figure 4b on a coated glass sheet G having an upper coated surface 28 and a lower uncoated surface 30 facing downwardly and supported by the roll conveyor 24 on its rolls 26.

Roll conveyor 24 of the furnace 12 illustrated in Figures 1 and 2 is preferably of the type disclosed by United States Patent Nos. 3,806,312; 3,934,970 and 3,994,711 wherein a rotary drive 31 of the conveyor includes a pair of continuous drive loops 32 that respectively support and frictionally drive the opposite ends 34 of the conveyor rolls 26. Drive loops 32 are preferably embodied as toothed chains of the link type connected by pins and are received by associated toothed wheels 36 and 38 adjacent the entrance and exit ends 20 and 22 of the furnace housing at each of its lateral sides. Driving of these tooths wheels 36 and 38 slidably moves an upper reach of each drive loop 32 over an associated support surface 40 located outside of the furnace housing heating chamber 18 at the adjacent lateral side of the furnace. Roll positioners 42 project upwardly from the support surfaces 40 and capture central pins of the roll ends such that movement of the drive loops frictionally drives the roll ends to provide rotation of rolls 26 and consequent conveyance of the glass sheet G supported by the rolls within the heating chamber 18. The rolls 26 are made of sinter bonded fused silica particles so as to be resistant to thermal warpage. With this embodiment, the rotary drive 31 drives the conveyor rolls 26 in opposite directions as the glass sheets are conveyed within the heating chamber 18 in an oscillating manner between the entrance and exit ends 20 and 22 of the furnace housing.

The furnace housing 16 as illustrated in Figure 2 includes a fixed lower housing portion 44 and a vertically movable upper housing 46 supported by counterbalanced chains 48 so as to permit access to the interior of the furnace by upward movement. A framework 50 of the lower housing portion 44 has legs 52 supported on the factory floor 54 and had horizontal beams 56 that support a corrugated metal liner 58 which in turn supports ceramic blocks 60 which support an insulated floor 62 and define vertical side walls 64 having upper ends 66. The upper housing portion 46 has a downwardly opening semicircular shape having lower ends 68 that cooperate with the upper ends 66 of the lower housing side walls 64 to define side slots 70 through which the conveyor roll ends 34 project outwardly from the heating chamber. Heat seals 72 seal in the side slots 70 between the lower housing vertical wall upper ends 66, the upper housing lower ends 68 and the rolls 26 at their ends 34 to reduce heat loss from the furnace. The drive loops 32 and toothed wheels 36 and 38 thus provide rotary driving of the conveyor roll ends 34 externally of the heating chamber so as to facilitate their operation. Also, the upper housing portion 46 has an outer semicircular metal skin 74 supported on a generally semicircular metal frame 76, and outer and inner semicircular ceramic blocks 78 and 80 are located within the frame 76.

With continuing reference to Figure 2, electric resistance elements 82 for heating the furnace housing 16 are located within the heating chamber 18 both below and above the roll conveyor 24. More specifically, the lower housing portion 44 has its floor 62 provided with T-shaped retainers 84 that secure the electric resistance elements 82. Sometimes the electric resistance elements are also mounted on the lower side walls provided by blocks 60. Furthermore, the inner downwardly opening semicircular ceramic block 80 of the upper housing portion 46 has T-shaped retainers 84 that secure its electric resistance elements 82 above the roll conveyor 24.

With the furnace construction defined above, much of the radiant heating of the lower surface 30 of the glass sheet is provided by radiation from the hot conveyor rolls 26 as well as some conduction from the conveyor rolls in addition to natural convection. The semicircular construction of the upper housing portion 46 provides a more uniform radiant heating of the upper surface of the conveyed glass sheet G than is possible with a downward opening housing portion having right angle corners.

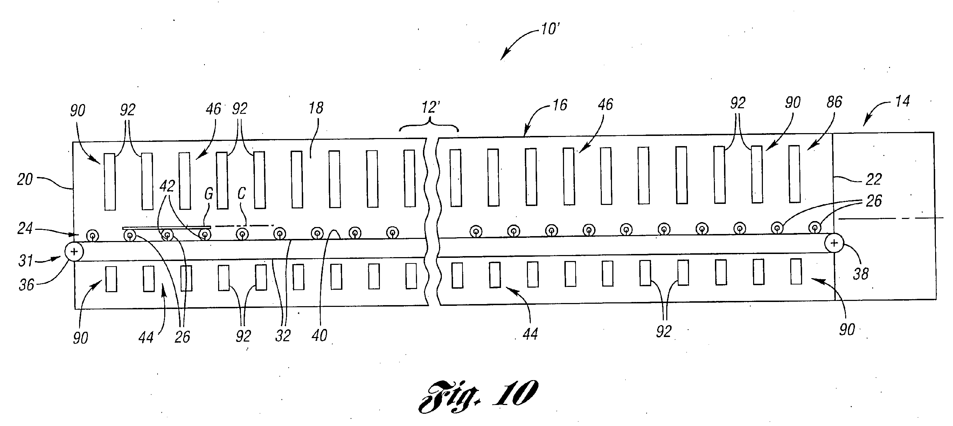

As illustrated schematically in Figure 1 and further illustrated in Figures 2 and 3, the furnace also includes a hot air distributing system 86 that is located within the furnace heating chamber 18 between the entrance and exit ends 20 and 22 above the roll conveyor 24 and supplies hot air jets 88 (Figure 6) upwardly and downwardly toward the conveyed glass sheet to entrain hot air within the heating chamber and the combined flow of hot air provides convective heating of the glass sheet in addition to the radiant heating thereof by the electric resistance elements 82. The hot air jets entrain a large amount of heated air within the furnace, perhaps 10 to 20 times the mass flow of the jets, such that substantial forced convection heating results. A control collectively indicated by 89 in Figure 3 controls the hot air distributing system 86 during the glass sheet conveyance as is hereafter more fully described so the lower and upper glass surfaces as the glass sheet are at the same temperature throughout the heating.

When the heating is performed on an uncoated glass sheet G as illustrated in Figure 4a, the amount of upward and downward convective heating is controlled so that this convective heating as well as the radiant heating provided by the electric resistance elements maintains the upper and lower surfaces 28 and 30 at the same temperature as each other throughout the heating. With both the electric resistance heating and this forced convection heating in the manner described, much faster heating of the glass sheet can be achieved.

When coated glass sheets are heated as illustrated in Figure 4b, the upper reflective coating reflects much of the radiant energy such that a greater amount of downward forced convection heating is necessary to balance the radiant heating of the lower surface. Furthermore, as the temperature of the glass is increased during the heating, the radiant heating of the lower uncoated surface 30 is mostly absorbed and the radiation increases by the fourth power of the difference between the furnace temperature and the glass temperature; however, the temperature of the upper reflective coated surface 28, which largely reflects radiation, requires that the convection be increased in order to counterbalance the greater radiant heating of the lower surface. Thus, the increase of the convective heating of the upper coated surface 28 provides the balancing required so that both surfaces are heated at the same rate and have the same temperature so the glass remains planar during its heating. This increase in the convective heating is at an increasing rate over time and controlled by the total mass flow of pressurized air supplied through the hot air distributing system to provide the hot air jets that also entrain the hot air within the furnace heating chamber.

As illustrated in Figures 2 and 3, the hot air distributing system 86 includes lower and upper arrays 90 of hot air distributors 92 positioned below and above the roll conveyor between the entrance and exit ends of the furnace. A source of pressurized air 94 shown in Figure 3 will normally be a compressor and is located outside the furnace to supply pressurized air to the hot air distributors 92. Furthermore, the hot air distributors 92 include heat exchangers 96 for heating the pressurized air prior to delivery therefrom as the hot air jets 88 shown in Figure 6. With this heat exchanger 96 as is hereinafter more fully described, the hot air jets 88 are supplied at a temperature only slightly less than the furnace ambient air temperature. For example, if the air in the furnace heating chamber is about 700°C, the hot air jets will be only about 20 to 40°C lower, i.e., about 660 to 680°C.

As shown in Figure 3, the control 89 includes valves 98 and 99 through which the pressurized air is respectively supplied from the source 94 to the upper and lower arrays 90 of hot air distributors 92. A controller 100 of control 89 operates the valves 98 and 99 to provide control of the air pressure supplied to the upper and lower arrays of hot air distributors and thereby provide the pressure that supplies the necessary mass flow to achieve the convective heating to be performed from both above and below the roll conveyor. Controller 100 also has connections 102 to solenoid operated shutoff valves 104 that each control the air flow to particular hot air distributors 92. Note that these solenoid operated shutoff valves for the lower array 90 although unshown are the same as for the upper array as shown. More specifically as illustrated, each solenoid valve 104 controls the flow of the pressurized air from the control valve 98 to three of the hot air distributors 92. This controller 100 is coupled with the conveyor and suitable sensors to provide the hot air jets only where there is an adjacent glass sheet being conveyed. Thus, after the glass sheet passes each set of hot air distributors 92, its associated shutoff valve terminates the flow of hot air so as to thus provide efficiency in the convective heating supplied by the hot air distributing system 86. With the embodiment of Figure 1 wherein the glass sheet G being heated is oscillated between the entrance and exit ends 20 and 22 of the furnace housing 16, the location where the upwardly and downwardly directed air jets are supplied thus moves back and forth with the conveyed glass sheet.

When uncoated glass is being heated as illustrated in Figure 4a, the control valves 98 and 99 operated by the controller 100 can maintain a constant mass flow of the pressurized air for the convective heating so as to provide the acceleration of the heating in combination with the radiant heating provided by the electric resistance elements. When coated glass sheets are being heated as illustrated in Figure 4b, one or both of the valves 98 and 99 are operated to provide the increase of the mass flow of downwardly directed hot air jets relative to the upwardly directed air jets so as to balance the increased radiant heating absorbed by the lower surface unlike the upper surface which mostly reflects the radiation.

With reference to Figure 5, the illustrated hot air distributors 92 of the upper array 90 is also illustrative of the hot air distributors of the lower array except for their opposite vertical orientation and other features hereinafter described. As shown, each hot air distributor 92 includes a manifold 106 and a vertical support tube 108 having a first end that is supported by the manifold 106 extending vertically therefrom without direct fluid communication therewith at its first end. The vertical support tube also has a second end adjacent the conveyor and is received by a T fitting 110. A horizontal delivery tube 112 of each hot air distributor 92 extends in opposite directions from the second end of the support tube 108 and is communicated therewith through the T fitting 110. The delivery tubes 112 of the upper and lower hot air distributors 92 as shown in Figure 6 have downwardly and upwardly directed orifices 114. The delivery orifices 114 are provided in sets that are vertical and inclined in opposite directions from the vertical by an angle of about 30°. As illustrated in Figure 7, the delivery orifices 114 of adjacent hot air distributors in both the lower and upper arrays are staggered laterally with respect to the direction of conveyance so as to prevent strip heating of the coated glass sheet.

As best illustrated in Figure 5, the heat exchanger 96 of each hot air distributor 92 includes a heat exchanger tube 116 having an inlet 118 that is fed pressurized air through the manifold 106 and an outlet 120 through which pressurized air heated within the heat exchanger tube is fed to the vertical support tube 108 for flow to the horizontal delivery tube 112 and delivery through the orifices 114 thereof as the downwardly and upwardly directed hot air jets that also entrain hot air in the heating chamber and such that the combined flow of hot air provides convective heating of the upwardly and downwardly facing glass surfaces of each conveyed glass sheet as previously described. Each horizontal delivery tube 112 has opposite lateral ends 122 having a heat exchanger support 124. Each heat exchanger tube 116 has inclined portions 126 extending between the manifold 106 and the supports 124 at the pair of opposite lateral ends 122 of the delivery tube. More specifically, each heat exchanger tube 116 includes a pair of the inclined portions 126 that extend with the inverted V shape between the upper manifold 106 and the supports 124 at the opposite lateral ends 122 of the horizontal delivery tube. The supports 124 for the heat exchanger tube 116 permit movement therebetween to account for differential heating that takes place between the heat exchanger tube and the deliver tube 112 during the operation.

The upper manifold 106 as shown in Figure 5 includes a vertical supply tube 128 that extends vertically from the furnace housing 16 and the manifold also has a horizontal supply tube 130 that extends horizontally from the vertical supply tube. Each manifold 106 supports three of the hot air distributors 92 as illustrated with the heat exchanger tube inlets 118 provided at the horizontal supply tube 132 for the two end distributors and with the heat exchanger inlet 118 provided by the vertical supply tube 130 at the intermediate distributor.

With reference to Figures 8 and 9, another preferred embodiment of the hot air distributing system 86' has the same construction as the previously described embodiment except as will be noted such that like components thereof are identified by like reference numerals and much of the previous description is applicable and thus will not be repeated. In this embodiment of the hot air distributing system 86' , each hot air distributor 92 has the fluid connections between the vertical support tube 108 and the horizontal delivery tube 112, between the heat exchanger tube 116 and the horizontal supply tube 130 and between the vertical supply tube 128 and the horizontal supply tube 130 provided by machined holes into which tube ends are inserted and then welded air tight so as to eliminate the need for fittings. Also, each upper hot air distributor 92 includes a pair of inclined supports 132 having upper ends connected to the manifold 106 and having lower ends connected to the horizontal delivery tube in an inverted V shape that provides support to the delivery tube. The inclined supports 132 are connected to the horizontal delivery tube 112 inwardly from its ends 122 so as to define a smaller included angle than the angle defined by the inclined portions 126 of each heat exchanger tube 116.

The hot air distributing system 86' illustrated in Figures 8 and 9 also includes support brackets 134 that connect adjacent upper hot air distributors 92 at the lower ends of their inclined supports 132. As illustrated, each bracket 132 connects three of the hot air distributors 92 which are supported by a common vertical supply tube 130 as a set. Each bracket 134 has an upper connector 136 and the furnace housing has downwardly extending roof supports 138 that support the upper connectors 136 of the brackets 134 which thereby cooperate in supporting the delivery tubes 112 of the associated hot air distributors. Each vertical support tube 108 as illustrated in Figure 9 has a lower bent end 140 which provides space at a central location between the adjacent sets of three hot air distributors 92 for a location of thermocouples utilized for temperature sensing. To facilitate manufacturing, the central hot air distributor 92 of each set of three has its vertical support tube 108 also provided with such a lower bent end 140. Furthermore, the heat exchanger tubes 116 of each hot air distributor are all of the same construction with the two left ones illustrated in Figure 9 oriented the same as each other and with the right one rotated 180° about a vertical axis so that the lower ends 140 provide the thermocouple space between the adjacent sets of three distributors.

As illustrated in Figure 2, the lower array 90 of lower hot air distributors 92 also has supports 129 that extend upwardly from the floor 62 of the lower housing portion to brackets 134 that support the horizontal delivery tubes 112 of adjacent lower hot air distributors. Due to the available height, the heat exchangers 96 of the lower hot air distributors 92 are shown as having a slightly greater included angle. Because of the rolls 26 of the roll conveyor 24, these lower hot air distributors 92 are most preferably spaced so as to provide upwardly directed hot air jets between the conveyor rolls and, as such, the spacing may not be as uniform as with the upper array 90 of hot air distributors 92.

With the embodiment of the furnace 12 illustrated in Figure 1, the glass sheets being heated are conveyed as previously mentioned in an oscillating manner between the entrance and exit ends 20 and 22 of the furnace housing. When higher production is necessary, the furnace can be of the continuous type as illustrated in Figure 10 wherein the furnace 12' has its conveyor 24 rotatively driven in a single direction so that the glass sheets being heated are conveyed in a single direction from the entrance end 20 toward the exit end 22 in preparation for the processing at the processing station 14.

While the preferred embodiments for practicing the invention have been described in detail, those familiar with the art to which this invention relates will recognize various alternative designs and embodiments as defined by the following claims.

## Claims

1. A furnace for heating glass sheets, comprising:
a housing having lower and upper housing portions that cooperate to define a heating chamber and having entrance and exit ends;
a roll conveyor for conveying a glass sheet to be heated within the heating chamber along a horizontal conveying plane between the entrance and exit ends of the housing;
electric resistance elements mounted on the lower and upper housing portions to provide radiant heating of the conveyed glass sheet from both below and above the conveying plane; and
a hot air distributing system including lower and upper arrays of hot air distributors respectively mounted within the heating chamber by the lower and upper housing portions below and above the conveying plane, and the lower and upper arrays are located between the entrance and exit ends of the housing and include a plurality of hot air distributors that respectively supply upwardly and downwardly directed hot air jets toward the conveyed glass sheet and these hot air jets also entrain hot air in the heating chamber and the combined flow of hot air provides convective heating of the glass sheet in addition to the radiant heating thereof by the electric resistance elements during the conveyance between the entrance and exit ends of the housing.

2. A glass sheet heating furnace as in claim 1 wherein hot air distributing system includes a source of pressurized air that is located outside the furnace and supplies pressurized air to the hot air distributors, and the hot air distributors including heat exchangers for heating the pressurized air prior to delivery therefrom as the hot air jets.

3. A glass sheet heating furnace as in claim 2 wherein the hot air distributing system includes a control having a controller for terminating the supply of pressurized air to the hot air distributors above and below which there is no glass sheet being conveyed.

4. A glass sheet heating furnace as in claim 2 wherein each hot air distributor includes a horizontal delivery tube that is fed hot air by its heat exchanger and that has orifices through which the hot air flows to provide the hot air jets that are directed toward the conveyed glass sheet to entrain the hot air within the heating chamber such that the combined flow of hot air provides the convective heating that cooperates with the radiant heating by the electric resistant elements to heat the glass sheet during its conveyance between the entrance and exit ends of the housing.

5. A glass sheet heating furnace as in claim 1 wherein the roll conveyor includes a drive that provides rotary driving thereof in opposite directions to provide oscillation of each glass sheet being heated during conveyance thereof in opposite directions between the entrance and exit ends of the housing.

6. A glass sheet heating furnace as in claim 1 wherein the roll conveyor includes a drive that provides rotary driving thereof in one direction to provide conveyance of each glass sheet in one direction from the entrance end of the housing to its exit end.

7. A glass sheet heating furnace as in claim 1 wherein the lower portion of the housing has a flat floor and vertical side walls having upper ends, the upper portion of the housing having a downwardly opening semicircular shape having lower ends located above the upper ends of the vertical side walls of the lower housing portion such that the housing portions cooperate to define the heating chamber, and the electric resistance elements being mounted within the heating chamber on the lower housing portion floor below the roll conveyor and on the semicircular upper housing portion above the roll conveyor.

8. A glass sheet heating furnace as in claim 1 wherein the upper ends of the vertical walls of the lower housing portion and the lower ends of the semicircular upper housing portion cooperate to define side slots, the roll conveyor including rolls having ends that project outwardly through the side slots of the furnace housing, heat seals that seal between the lower housing vertical side wall upper ends, the semicircular upper housing lower ends and the rolls to reduce heat loss from the heating chamber, and a drive that rotatively drives the roll ends externally of the heating chamber.

9. A glass sheet heating furnace as in claim 1 wherein the hot air distributing system includes a control having a controller for adjusting the flow of pressurized air from an external source to the lower and upper arrays of hot air distributors so the lower and upper surfaces of the conveyed glass sheet are at the same temperature as each other throughout the heating.

10. A method for heating glass sheets comprising:
conveying each glass sheet on a roll conveyor along a horizontal conveying plane within a heating chamber of a housing between entrance and exit ends thereof;
electrically heating resistance elements located both below and above the conveying plane to provide radiant heat to each conveyed glass sheet;
supplying hot air jets upwardly and downwardly toward the each conveyed glass sheet between the entrance and exit ends of the housing such that the hot air jets entrain hot air within the heating chamber and the combined flow of hot air providing forced convection heating of each conveyed glass sheet in addition to the radiant heating thereof by the electric resistance elements.

11. A method for heating glass sheets as in claim 10 wherein the hot air jets are supplied upwardly and downwardly through lower and upper arrays of hot air distributors between the entrance and exit ends of the housing with the hot air jet supply being terminated at each hot air distributor when there is no conveyed glass sheet above or below the distributor on the roll conveyor.

12. A method for heating glass sheets as in claim 10 wherein the roll conveyor is rotatively driven in opposite directions to convey the glass sheets in an oscillating manner between the entrance and exit ends of the housing.

13. A method for heating glass sheets as in claim 10 wherein the roll conveyor is rotatively driven in one direction to convey each glass sheet in one direction from the entrance end of the housing to its exit end.

14. A method for heating glass sheets as in claim 10 wherein the glass sheets conveyed have uncoated lower and upper surfaces.

15. A method for heating glass sheets as in claim 10 wherein the glass sheets conveyed each have an uncoated lower surface and a coated upper surface, and the supply of the downwardly directed hot air jets being increased relative to the upwardly directed hot air jets during the conveyance to provide isothermal heating of the surfaces.
